# EUROPEAN PATENT APPLICATION

(11) **EP 0 814 244 A1**
(43) Date of publication of application: **29.12.1997**
(21) Application number: 97303997.7
(22) Date of filing: 09.06.1997
(51) Int. Cl.: F02B 27/02

(54) **Induction systems for internal combustion engines**

(30) Priority: 11.06.1996 GB 9612143
(71) Applicant: RICARDO CONSULTING ENGINEERS LIMITED, West Sussex BN4 5FG (GB)
(72) Inventor: Baird, Peter Broderick Harry, Rudgwick, Sussex RH12 3DX (GB)
(74) Representative: Jennings, Nigel Robin

(57) **Abstract**

An induction system for an internal combustion engine of reciprocating piston type comprises an elongate plenum chamber (2) which communicates with the atmosphere and with a plurality of inlet ducts (18, 20) via respective relatively short passages (8), each of which includes a rotary valve member (22), which is mounted on a common rotary valve shaft (23) and is arranged selectively to open and close the short passage (8), and via respective relatively long passages which include no valve. The plenum chamber (2) and the inlet ducts constitute a one-piece casting. An access opening is provided in the casting adjacent each rotary valve member (22) through which the rotary valve member may be installed. Each access opening is closed by a respective snap-fit plastic closure plug (26).

## Description

The present invention relates to internal combustion engines of piston type and more particularly to induction systems for such engines of the type comprising an elongate plenum chamber which communicates with the atmosphere and with a plurality of inlet ducts via respective relatively short passages, each of which includes a rotary valve member, which is mounted on a common rotary valve shaft and is arranged selectively to open and close the short passage, and via respective relatively long passages which include no valve.

Engines consume air which is induced through a system of ducts and chambers leading to the intake valves. When each inlet valve opens, air (or an air/fuel mixture) enters the associated cylinder due to the motion of the piston causing a reduction in pressure in the cylinder. The output torque produced by the engine at a given speed is dictated largely by the quantity of fuel which can be burned during each combustion stroke and this depends on the mass of air which can be induced into the cylinder. For any given speed it is therefore advantageous to induce the greatest possible mass of air into the cylinder, that is to say, to maximise the volumetric efficiency of the induction process.

During the induction process of a four stroke reciprocating engine it is normally arranged for the inlet valve to remain open when the piston reaches the bottom of the inlet stroke. This is because, despite the fact that the piston is no longer moving, air continues to enter the cylinder under the influence of the kinetic energy or momentum of the air travelling through the induction system. The pressure in the cylinder rises due to the increasing mass of air within it until there is no further flow of air into the cylinder. It is normally arranged for the inlet valve to close at or near this point in the cycle. Advantage can, therefore, be taken of the kinetic energy of the air within the induction system to increase the mass of air induced into the cylinder.

When an engine inlet valve associated with an induction system opens, a depression or reduction in the air pressure occurs immediately upstream of the valve. This depression travels in the form of a wave, against the flow of air, towards the upstream end of the induction duct. It is a known phenomenon that when the depression reaches an opening or large volume chamber, it is reflected back towards the valve as an increase in pressure. If this increased pressure wave reaches the inlet valve before it closes. it has the effect of forcing additional air into the cylinder. Thus, this effect also provides an improvement in volumetric efficiency and an increase in torque. However, this improvement in torque can only be provided across a very limited speed range since the speed at which the pressure waves travei is substantially constant but the time for which the inlet valve is open varies in proportion to engine speed. It is common practice to tune the length of the intake duct so that maximum benefit is gained from this effect at high engine speeds. At low engine speeds, therefore, no improvement in volumetric efficiency or output torque can be gained from the reflected pressure wave effect.

GB-A-2221954 discloses a solution to this problem. This specification discloses an induction system of a type similar to that referred to above comprising a plenum chamber which communicates with the atmosphere and with one or more inlet ducts which, in use, are connected to respective inlet ports of the engine. The plenum chamber communicates with each inlet duct via a relatively short passage which includes a valve and relatively long passage which includes no valve. The total length of the inlet passage, that is to say the passage between the plenum chamber and the cylinder, is thus selectively variable between two different values and is varied in dependence on the engine speed so that the reflected pressure wave effect may be used at both high and low engine speeds.

The problem with the induction system disclosed in the prior specification referred to above is the same as that in all induction systems of the type referred to above, namely that in order to be able to fit the rotary valve members onto the common rotary valve shaft it is necessary for the induction system to be provided in the form of two separate components which must be subsequently connected together. This adds considerably to the manufacturing cost and complexity. The necessity of providing two separate components also necessarily results in the internal passages being relatively complex and in the induction system thus being relatively heavy and bulky.

Accordingly, it is the object of the invention to provide an induction system of the type referred to above in which the various problems referred to are eliminated.

According to the present invention, the above object is achieved if the plenum chamber and the inlet ducts constitute a one-piece component, if an access opening is provided in the component adjacent each rotary valve member and if each access opening is closed by a respective closure which may be permanently secured in position or which may be removable and may thus be provided in the form of e.g. a snap-fitting plug of plastics material.

The present invention is thus based on the recognition that in order to gain access to the interior of the induction system for the purpose of positioning the rotary valve members it is not necessary that the system be provided in two parts but that this may be achieved also by the provision of closable access openings. This considerably facilitates the manufacture of the induction system and enables the arrangement of the internal passages to be simplified.

It is preferred that, as conventional, the inlet ducts each comprise a minor portion extending away, e.g. in the generally radial direction, from the plenum chamber and a major portion inclined at a substantial angle to the minor portion and that the long passages extend around a proportion of the periphery of the plenum chamber transverse to its length. In this event, it is preferred that the minor portions of the inlet ducts communicate with the respective long passages via respective apertures extending in a row along the length of the plenum chamber on the side remote from the major portions of the inlet ducts. It is also preferred that the short passages are constituted effectively by respective apertures extending in a row along the length of the plenum chamber on the side closest to the major portions of the inlet ducts, each aperture accommodating a respective rotary valve member, e.g. a butterfly valve.

In order to ensure that the locations of the valve members are readily accessible, it is preferred that the access openings are provided in the inlet ducts at or adjacent the positions where the major and minor portions merge.

Induction systems of the type to which the invention relate are frequently used on engines of indirect injection type, that is to say engines in which fuel is injected into each inlet duct. The fuel injectors are commonly provided such that they inject fuel into each inlet duct in a direction which extends only at an acute angle to the direction of air flow through the inlet duct and this necessitates the provision of a protuberance or external shoulder on each inlet duct in which an opening is formed, the opening extending at an acute angle to the length of the associated portion of the inlet duct. It is conventionally necessary that this opening and the surrounding surface of the external shoulder be machined to ensure that the fuel injector can be appropriately received in it and in the known induction systems this does not constitute a problem because the induction system is in two portions and the machining is performed before the two portions are connected together. However, such machining is potentially more problematic in the induction system in accordance with the present invention because the plenum chamber and the long passages extending around it impede access of the necessary machine tools to the shoulder. However, this problem can be overcome by providing the shoulder relatively close to the free end of the inlet duct and performing machining of the opening through the open end of the inlet duct. A fuel injector can then be received and retained in each opening by means of a one-piece plastics moulding which is then inserted and retained in the opening, e.g. by snap-fitting it in position. This renders machining of the surface of the shoulder around the opening unnecessary.

Further features and details of the invention will be apparent from the following description of one specific embodiment which is given by way of example only with reference to the accompanying drawings, in which:

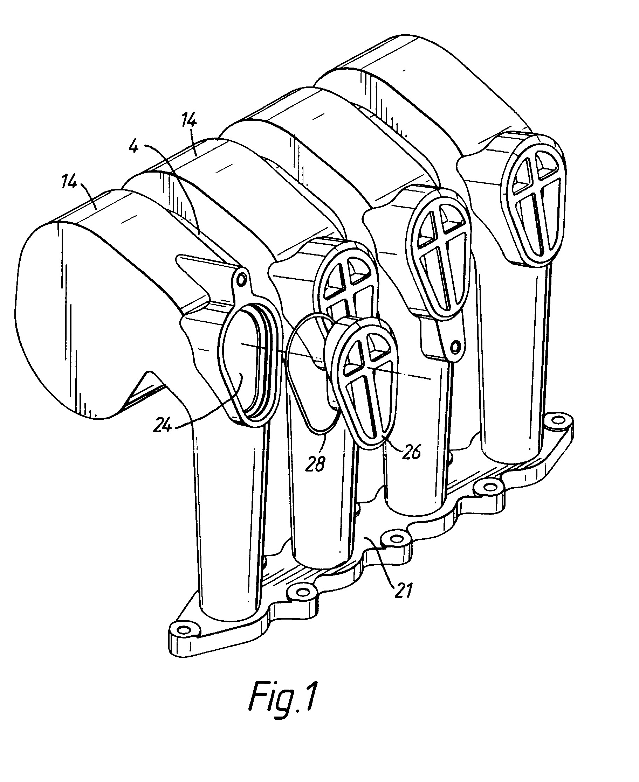

Figure 1 is a perspective view of an induction system for a four cylinder internal combustion engine of reciprocating piston type;
Figure 2 is a transverse sectional view through the induction system shown in Figure 1 prior to the fitting of the rotary valve members, the access covers and the fuel injector fittings; and
Figure 3 is a view similar to Figure 2 but after fitting the rotary valve members, the access covers and the fuel injector fittings.

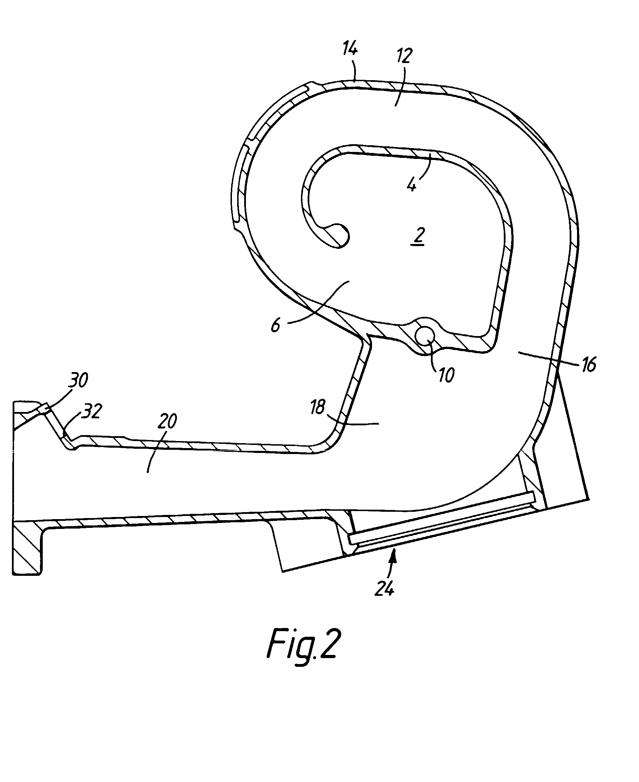

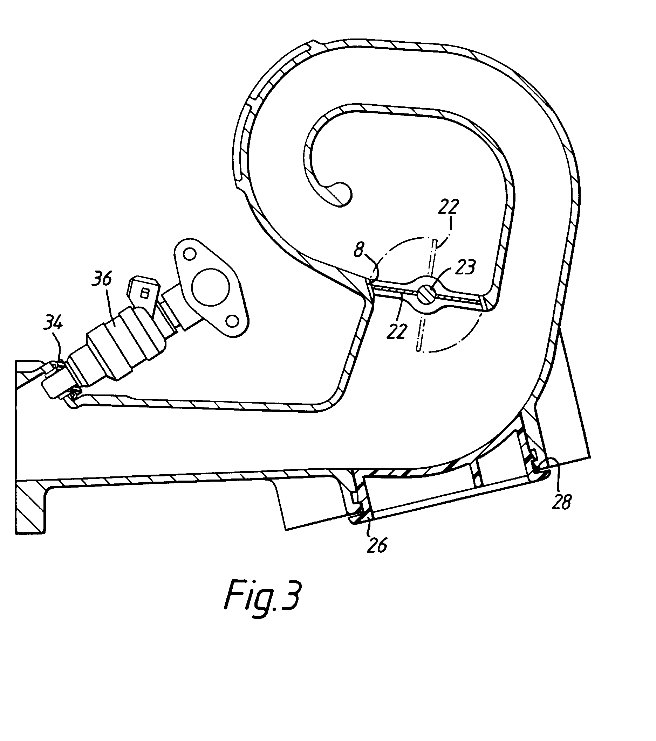

The induction system comprises a one-piece casting of conventional metal comprising an elongate plenum chamber 2 which is closed at one end and communicates at the other end with the atmosphere via a conventional air filter (not shown). The plenum chamber 2 is defined by a substantially tubular wall 4 in which four openings 6 disposed in a row are formed. Also formed in the wall 4 is a further row of four openings 8 whose positions correspond to those of the opening 6 and which are downwardly directed in Figures 2 and 3. Formed in that portion of the plenum chamber wall 4 which defines the openings 8 is a circular passage 10 for the accommodation of a rotary valve shaft 23 (shown in Figure 3 only).

Integral with the plenum chamber wall 4 are four long passages 12 which are defined by respective outer walls 14 and extend around a substantial proportion of the peripheral surface of the plenum chamber 2. The long passages 12 terminate at one end at a respective one of the openings 6 and at the other end at a respective opening 16.

Also integral with the plenum chamber wall 4 are four inlet ducts, each of which comprises a minor portion 18, which extends away from the plenum chamber 2 in a generally radial direction, and a major portion 20 which communicates with the minor portion 18 and whose axis is inclined at a substantial angle, in this case about 110°, to the axis of the minor portion 18. The major portions 20 of the inlet ducts terminate at a free end which, in use, is connected to a respective inlet port of an engine (not shown). The free ends are connected together by an integrally cast flange 21 affording holes through which fastening bolts are passed to connect the induction system to the associated cylinder block.

Each inlet duct 18, 20 thus communicates with the plenum chamber 2 via a respective long passage 12 and via a respective opening 8, which constitutes a short passage. Received in each opening 8 is a butterfly valve 22 which is mounted on the common rotary valve member 23 for rotation between the position shown in solid lines in Figure 3 in which it closes the associated opening 8 and the position shown in chain-dotted lines in Figure 3 in which the opening 8 is open.

The rotary valve shaft is connected to an appropriate actuator (not shown) which is controlled by the engine management system. The engine management system is programmed so that at relatively low engine speeds the butterfly valves 22 are all closed whereby the plenum chamber 2 communicates with the inlet ducts 18, 20 only via the long passages 12. However, at relatively high engine speeds the engine management system opens the butterfly valves 22 and the inlet ducts communicate with the plenum chamber via the short passages constituted by the openings 8. Substantially no air then flows through the long passages 12. The cross-sectional area of the openings 8 is substantially greater than that of the opening 16 and thus the air flows through relatively long and relatively small passages at low engine speed and through relatively short and relatively large passages at high engine speed, as is known to be desirable, thereby ensuring that the inlet air speed never falls to an excessively low value, even at low engine speed, and that benefit is obtained from the pressure pulse phenomenon described above at both high and low engine speeds.

In order to enable the butterfly valves 22 to be fitted into position when the induction system is manufactured, or when repair or replacement is necessary, each inlet duct is provided with an access opening 24 on the exterior of the bend constituted by the junction of the minor and major portions of the inlet duct. Each access opening 24 is closed by a respective closure plug 26 of moulded plastics material which is snap-fitted in position. Each closure plug 26 forms a reliable seal with the associated opening 24 by virtue of the provision of a respective O-ring 28. In the course of manufacture, each butterfly valve 22 is inserted through the associated access opening 24 and placed in the desired position in the associated opening 8 and is then retained in that position by advancing the rotary valve shaft 23 through the tubular passage formed in it. The access opening 24 is then closed and sealed by snap-fitting the closure plug 26 with the O-ring 28 sandwiched between it and the margin of the hole 24.

The illustrated induction system is intended for use with an indirect injection gasoline engine. For this purpose, the major portion 20 of each inlet duct is provided with a shoulder 30 which is situated adjacent the free end of the major portion 20 and in which a bore 32 is formed, the axis of which extends at an acute angle of e.g. 40° to the axis of the major portion 20. The bore 32 is formed by machining through the adjacent open end of the major portion 20. Subsequent to the machining process, a one-piece plastic moulded sleeve 34 is snap-fitted into the bore 32. This sleeve 34 is adapted to accommodate a fuel injector 36.

## Claims

1. An induction system for an internal combustion engine of reciprocating piston type comprising an elongate plenum chamber (2) which communicates with the atmosphere and with a plurality of inlet ducts (18, 20) via respective relatively short passages (8), each of which includes a rotary valve member (22), which is mounted on a common rotary valve shaft (23) and is arranged selectively to open and close the short passage (8), and via respective relatively long passages (12) which include no valve, characterised in that the plenum chamber (2) and the inlet ducts (18, 20) constitute a one-piece component, that an access opening (24) is provided in the component adjacent each rotary valve member (22) and that each access opening (24) is closed by a respective closure plug (26).

2. A system as claimed in Claim 1 in which the one-piece component constitutes a casting.

3. A system as claimed in Claim 1 or 2 in which the closure plug (26) is a snap-fitting plug of plastics material.

4. A system as claimed in any one of the preceding claims in which the inlet ducts each comprise a minor portion (18) extending away from the plenum chamber (2) and a major portion (20) inclined at a substantial angle to the minor portion (18) and the long passages (12) extend around a proportion of the periphery of the plenum chamber (2) transverse to its length.

5. A system as claimed in Claim 4 in which the minor portions (18) of the inlet ducts communicate with the respective long passages (12) via respective apertures (16) extending in a row along the length of the plenum chamber (2) on the side remote from the major portions (20) of the inlet ducts.

6. A system as claimed in Claim 4 or 5 in which the short passages are constituted by respective apertures (8) extending in a row along the length of the plenum chamber (2) on the side closest the major portions (20) of the inlet ducts, each aperture (8) accommodating a respective rotary valve member (22).

7. A system as claimed in any one of Claims 4 to 6 in which the access openings (24) are provided in the inlet ducts at positions where their major (20) and minor (18) portions merge.

8. A system as claimed in any one of the preceding claims in which each inlet duct (18, 20) has an external shoulder (30) in which an opening (32) is formed, the axis of the opening (32) extending at an acute angle to the length of the associated portion (20) of the inlet duct, a one-piece plastics moulding (34) adapted to receive a fuel injector being retained in each opening (32).

9. A system as claimed in any one of the preceding claims in which the cross-sectional area of each short passage (8) is substantially greater than that of each long passage (12).
